# EUROPEAN PATENT APPLICATION

(11) **EP 3 834 914 A1**
(43) Date of publication of application: **16.06.2021**
(21) Application number: 19306652.9
(22) Date of filing: 13.12.2019
(51) Int. Cl.: B01D 53/04, B01D 53/68, B01D 53/82

(54) **USE OF A TRANSITION METAL OXIDE FOR REMOVING FLUORINATED BY-PRODUCTS FROM A GAS, DEVICE AND METHOD FOR REMOVING SUCH BY-PRODUCTS**

(71) Applicant: General Electric Technology GmbH, 5400 Baden (CH)
(72) Inventor: MAKSOUD, Louis, 69100 VILLEURBANNE (FR); KIEFFEL, Yannick, 69100 VILLEURBANNE (FR); DUBOIS, Pierre, 69100 VILLEURBANNE (FR)
(74) Representative: Brevalex

(57) **Abstract**

The present invention relates a method for removing by-products from a gas (10) comprising such by-products, the by-products comprising fluoronitrile compounds and/or fluorocarbon compounds.

This method comprises a step (a) of contacting the gas (10) with a solid adsorbent phase (11) that comprises a molecular sieve and further comprises at least one transition metal oxide.

The present invention also relates to a device (5, 6) for removing fluorinated by-products from a gas (10) comprising such fluorinated by-products and to the use of at least one transition metal oxide in a solid adsorbent phase (11) comprising a molecular sieve for removing by-products from a gas (10) comprising said by-products, the by-products comprising fluoronitrile compounds and/or fluorocarbon compounds.

## Description

### FIELD

The present invention relates to the field of electrical insulation and extinguishing of electrical arcs in high-voltage electrical devices.

The present invention relates more particularly to a method for removing by-products from a gas comprising such by-products by contacting the gas with a particular solid adsorbent phase.

The present invention also relates to a device for removing by-products from a gas comprising said by-products, said device comprising a particular solid adsorbent phase.

The present invention also relates to the use of a specific compound in a solid adsorbent phase for removing by-products from a gas comprising said by-products.

In all of these cases, the by-products present in the gas comprise fluoronitrile compounds and/or fluorocarbon compounds.

### BACKGROUND

High-voltage electrical devices, such as circuit breakers or disconnectors, use a gas for electrical insulation.

In the foregoing and what follows, the expression "high-voltage" is used in its habitual acceptance and means a voltage that is strictly greater than 52 kV for alternating current and 75 kV for direct current.

Electrical insulation and possibly extinguishing of electric arcs in high-voltage electrical devices are typically done by a gas confined inside an enclosure in the devices.

At the present time, the most frequently used gas for that type of devices is sulfur hexafluoride SF₆ thanks to its high dielectric strength and superior arc quenching properties. However, SF₆ presents the major drawback of being a very powerful greenhouse gas, with a particularly high global warming potential (GWP).

Among the alternatives to the use of SF₆ as an electrical insulation gas, various gases of GWP that is lower than that of SF₆ are known, such as dry air, nitrogen or also carbon dioxide CO₂.

An advantageous electrical insulation gas is carbon dioxide CO₂ because of its strong electric insulation and arc-extinction capabilities. Furthermore, CO₂ is nontoxic, non-flammable, with a very low GWP, and is also easy to procure.

CO₂ can be used alone or in the form of a gas mixture, of which it constitutes the main gas.

A particularly advantageous electrical insulation gas mixture, which mainly comprises CO₂, is the electrical insulation gas mixture sold by General Electric Company under the name g³ (meaning "green gas for grid"), which has 98% less impact on GWP than SF₆.

The g³ gas mixture comprises a fluoronitrile compound, i.e. the heptafluoroisobutyronitrile gas of formula (CF₃)₂CF-CN.

This latter gas is namely sold by the 3M™ company under the commercial name 3M™ Novec™ 4710.

More particularly, the g³ gas mixture comprises, in mole percent (% mol):
- from 70 % mol to 97 % mol of CO₂,
- from 3 % mol to 10 % mol of (CF₃)₂CF-CN, and
- from 0 % mol to 20% mol of dioxygen O₂.

Inside a circuit breaker, arcing induces a partial decomposition of the different compounds forming the g³ gas mixture, leading to the formation of many by-products.

A recent publication of Y. Kieffel et al. ("Characteristics of g3 - an alternative to SF6", CIRED, Open Access Proc. J., 2017, Vol. 2017, Iss. 1, 54-57), referenced **[1]** at the end of the present description reviews the g³ gas characteristics and especially investigates the current interruption behaviour of this g³ gas after breaking tests and the by-products thereby produced and present in the so-called "arced gas".

These by-products may be classified in the following families:
- carbon monoxide CO that results from the CO₂ degradation;
- fluoronitrile compounds of formula R-CN in which R=CₚF_{q} and p and q are both integers. These fluorinated compounds result from the degradation of heptafluoroisobutyronitrile gas; and
- fluorocarbon compounds among which compounds of formula CₘFₙ in which m and n are both integers. These fluorinated compounds result from the decomposition of heptafluoroisobutyronitrile gas and from the wear of PTFE nozzles; and
- other compounds, particularly carbonyl difluoride COF₂ and ethanedinitrile NCCN.

The quantity of formed by-products depends on the physical conditions of the operation and on the chemical reactions involved in the process. Such quantity starts from few ppm up to few percentages.

As reported in publication **[1],** CO, which is known as being toxic, remains the major by-product in terms of quantity. But other by-products, and especially COF₂ and some fluorinated by-products, *i.e.* fluoronitrile and fluorocarbon compounds, can be toxic too.

Publication **[1]** describes that the implementation of specific adsorbents, such as a molecular sieve, may quite efficiently capture the fluorinated by-products generated by the decomposition of heptafluoroisobutyronitrile gas, thereby decreasing the toxicity of the gas. Capture of trifluoroacetonitrile CF₃CN and perfluoroisobutene (CF₃)₂C=CF₂ as fluorinated by-products and of ethanedinitrile (CN)₂ is especially reported in this publication **[1].**

However, experience shows that some other fluorinated by-products cannot be captured by adsorption on such a molecular sieve. Among these other fluorinated by-products, fluoronitrile compounds of formulas CF₃-CF₂-CN and CF₃-C≡C-CN, on the one hand, and fluorocarbon compounds of formula CF₂=CF-CF₃, on the other hand, may be particularly cited.

The purpose of the invention is thus to propose a method that further improves the capture of the fluorinated by-products generated by arcing the g³ gas mixture, in order to lower the global by-products content, especially the fluorinated by-products content, together with the gas toxicity, thereby improving the purity of the resultant g³ gas mixture.

In particular, the method of the invention must allow for removing the fluoronitrile and fluorocarbon compounds that have just been cited.

### BRIEF DESCRIPTION

These purposes mentioned above as well as others are achieved, firstly, with a method for removing fluorinated by-products from a gas comprising such fluorinated by-products, the fluorinated by-products comprising fluoronitrile compounds and/or fluorocarbon compounds, said method comprising a step (a) of contacting the gas with a solid adsorbent phase comprising a molecular sieve.

According to the invention, the solid adsorbent phase further comprises at least one transition metal oxide.

The combination of the molecular sieve with the at least one transition metal oxide makes it possible to greatly improve chemical adsorption of the fluorinated by-products by the solid adsorbent phase. As shown by the experimental results described hereafter, fluorinated by-products with high toxicity, such as CF₂=CF-CF₃ and CF₃-CF₂-CN, but also other fluorinated by-products can be efficiently adsorbed, while their adsorption is not possible with a solid adsorbent phase that only consists in a molecular sieve. It must be noted that this chemical adsorption does not generate any other new compounds.

The particular solid adsorbent phase implemented in the method of the present invention consequently helps purifying the electrical insulating gas as well as maintaining its properties, and therefore improves the lifetime of this gas use.

According to one favourable embodiment of the invention, step (a) is carried out by passing the gas through the solid adsorbent phase. In such an embodiment, the contact surface between the gas and the solid adsorbent phase increases and allows a more efficient adsorption of the fluorinated by-products.

The solid adsorbent phase implemented in the method of the present invention may be placed in one or more cylinders in the gas flow circuit without a noticeable change in the current equipment.

In this favourable embodiment of the invention, the method further comprises, after step (a) of contacting the gas with the solid adsorbent phase, a step (b) of recovering the gaseous phase. This gaseous phase is characterized by a remarkable decrease of the quantity of fluorinated by-products, in comparison with a corresponding gaseous phase resulting from a contact with a solid adsorbent phase consisting in a molecular sieve.

According to one embodiment, step (a) and possibly step (b) are carried out at a temperature comprised between 0 °C and 40 °C, advantageously between 15 °C and 30 °C and, preferably, at room temperature, which typically corresponds to a temperature comprised between 19 °C and 25 °C.

The method for removing fluorinated by-products of the present invention thus improves the lifetime of the gas use without excessive energy consumption.

According to another embodiment of the invention, the method implements at least one cycle comprising steps (a) and (b). In other words, these step (a) of passing the gas through the solid adsorbent phase and step (b) of recovering the gaseous phase may be repeated one or several times, so as to increase the method efficiency and the gas quality by further capturing the remaining fluorinated by-products.

This gas quality may be namely followed using spectroscopy.

According to one embodiment, the at least one transition metal oxide of the solid adsorbent phase comprises copper oxide CuO.

In an advantageous embodiment, CuO is blended with zinc oxide ZnO and/or with one or more transition metals, *i.e*. at their degree of oxidation 0, such as Cu or Zn.

Blends of CuO and ZnO, such as a blend of CuO/ZnO or of CuO/ZnO/Cu/Zn such as the blend sold by the company BASF under the commercial name PuriStar®R3-17, are particularly suitable as the at least one transition metal of the solid adsorbent phase.

The Inventors indeed observed that, surprisingly and unexpectedly, this particular blend PuriStar®R3-17, which is known for adsorption of carbon monoxide CO from gaseous and liquid hydrocarbon streams, makes it possible to efficiently capture fluorinated by-products and especially those that are not adsorbed by the current molecular sieves.

The fluorinated by-products, which are removed from the gas containing them, comprise fluoronitrile compounds and/or fluorocarbon compounds.

In one embodiment of the invention, the fluoronitrile compounds comprise at least one compound selected from the group consisting of:
- CF₃-CF₂-CN

   (pentafluoropropionitrile),
- CF₃-C≡C-CN,
- CF₂=CF-CN

   (perfluoroacrylonitrile), and
- (CF₃)₂CF-COOCN.

In one preferred embodiment, the fluoronitrile compounds comprise CF₃-CF₂-CN and CF₃-C≡C-CN.

In one embodiment of the invention, the fluorocarbon compounds comprise at least CF₂=CF-CF₃.

The gas comprising the fluorinated by-products can come from different sources.

According to one embodiment of the present invention, the gas comprising the fluorinated by-products results from a partial decomposition under arcing of an electrical insulation gas mixture that comprises CO₂ and (CF₃)₂CF-CN.

Preferably, the electrical insulation gas mixture has the following composition, in mole percent:
- from 70 % mol to 97 % mol of CO₂,
- from 3 % mol to 10 % mol of (CF₃)₂CF-CN, and
- from 0 % mol to 20 % mol of O₂.

It must be noted that the expression *"from... to*..." that has been used to define intervals, and which is used in the remainder of the present application, must be understood as defining not only the values of the interval, but also the values of the limits of said interval.

As already mentioned, such an electrical insulation gas mixture is commercially available under the commercial name 3M™ Novec™ 4710.

In addition to the at least one transition metal oxide, the solid adsorbent phase implemented in the method of the invention comprises a molecular sieve.

In one advantageous embodiment of the invention, this molecular sieve is a zeolite molecular sieve, this zeolite molecular sieve being preferably a 5A zeolite molecular sieve.

The invention secondly relates to a device for removing fluorinated by-products from a gas comprising such fluorinated by-products, the device comprising a solid adsorbent phase that comprises a molecular sieve.

According to the present invention, the solid adsorbent phase of the device further comprises at least one transition metal oxide.

The at least one transition metal oxide is as defined hereinabove, with the precision that the advantageous and preferred characteristics described hereinabove in relation with this at least one transition metal and the molecular sieve can be taken individually or in combination.

The device according to the present invention may be particularly useful for implementing the method that is defined hereinabove for removing fluorinated by-products from a gas comprising such fluorinated by-products, the fluorinated by-products comprising fluoronitrile compounds and/or fluorocarbon compounds.

The invention thirdly relates to the use of a specific compound in a solid adsorbent phase comprising a molecular sieve for removing fluorinated by-products from a gas comprising said fluorinated by-products, the fluorinated by-products comprising fluoronitrile compounds and/or fluorocarbon compounds.

This specific compound, the use of which is also the subject of the present invention, is the at least one transition metal oxide as defined hereinabove, with the precision that the advantageous and preferred characteristics described hereinabove in relation with this at least one transition metal, the molecular sieve, the fluorinated by-products and the gas can be taken individually or in combination.

As such, as mentioned above in connection with the method for removing fluorinated by-products from a gas comprising such fluorinated by-products, the at least one transition metal oxide of the solid adsorbent phase may particularly comprise copper oxide CuO.

In an advantageous embodiment, this CuO is blended with zinc oxide ZnO and/or with one or more transition metals, *i.e*. at their degree of oxidation 0, such as Cu or Zn.

Blends of CuO and ZnO, such as a blend of CuO/ZnO or of CuO/ZnO/Cu/Zn such as the blend sold by the company BASF under the commercial name PuriStar®R3-17, are particularly suitable as such at least one transition metal.

In an advantageous embodiment of the present invention, the molecular sieve present in the solid adsorbent phase is a zeolite molecular sieve, this zeolite molecular sieve being preferably a 5A zeolite molecular sieve.

In another advantageous embodiment of the present invention, the fluoronitrile compounds comprise at least one compound selected from the group consisting of CF₃-CF₂-CN, CF₃-C≡C-CN, CF₂=CF-CN and (CF₃)₂CF-COOCN and, preferably, CF₃-CF₂-CN and CF₃-C≡C-CN.

In another advantageous embodiment of the present invention, the fluorocarbon compounds comprise at least CF₂=CF-CF₃.

In another advantageous embodiment of the present invention, the gas comprising the fluorinated by-products results from a partial decomposition under arcing of an electrical insulation gas mixture that comprises CO₂ and (CF₃)₂CF-CN, such electrical insulation gas mixture preferably having the following composition, in mole percent:
- from 70 % mol to 97 % mol of CO₂,
- from 3 % mol to 10 % mol of (CF₃)₂CF-CN, and
- from 0 % mol to 20 % mol of O₂.

A solid adsorbent phase, which comprises a molecular sieve and the at least one transition metal oxide as defined hereinabove, may be added to any gas cart filters or to any other gas purification devices intended to be used for removing these above-mentioned fluorinated by-products.

Further characteristics and advantages of the present invention will be clear upon reading the complementary description that follows and which namely relates to tests of the by-products removal from an arced g³ mixture implemented with two different solid adsorbent phases, the first solid adsorbent phase being a conventional molecular sieve (reference) and the second one being in accordance with the present invention.

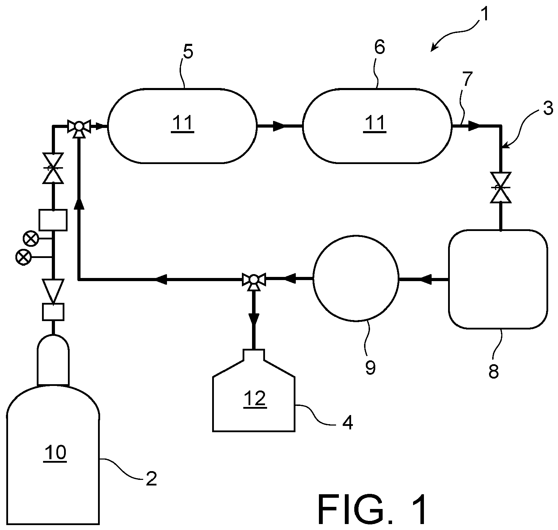

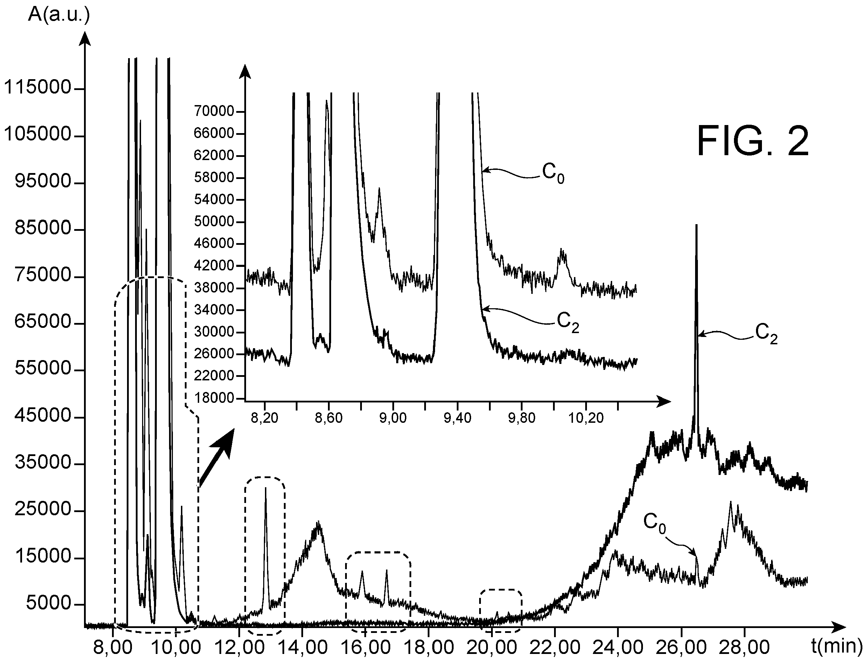

It is specified that these examples, which are in particular described in relation to the appended figures 1 and 2, are only given as illustrations of the objects of the invention and in no way form a limitation of these objects.

### BRIEF DESCRIPTION OF THE DRAWINGS

Figure 1 is a schematic drawing depicting the system used for carrying out tests of removing the by-products from an arced g³ mixture.
Figure 2 illustrates spectral curves reflecting the abundance (noted A and expressed in arbitrary unit a.u.), as a function of the time (noted t and expressed in min), of the by-products that are present in the arced g³ mixture before and after the test carried out with a solid adsorbent phase in accordance with the present invention.

### DETAILED DESCRIPTION

Figure 1 depicts a schematic drawing of a system 1 used for carrying out tests of the by-products removal, especially the fluorinated by-products removal, from an arced g³ mixture.

The system 1 comprises a high-pressure vessel 2, a closed-loop circuit 3 and a gas recovery tank 4. The circuit 3 is provided with two cylinders or devices 5, 6, the first device 5 and the second device 6 being arranged in series, a Fourier-transform infrared spectroscopy (FTIR) spectrometer 8 that is arranged at the outlet 7 of the second or device 6 and a vacuum pump 9. The high-pressure vessel 2 and the gas recovery tank 4 are both connected to the circuit 3.

The high-pressure vessel 2 is filled with arced g³ mixture 10 whereas the devices 5, 6 are both loaded with the same solid adsorbent phase 11.

For the first test, the solid adsorbent phase 11 is a solid adsorbent phase of reference, in accordance with the solid adsorbent phase disclosed by publication [1]. This solid adsorbent phase of reference is formed by a conventional molecular sieve, more particularly by a 5A zeolite molecular sieve.

For the second test, the solid adsorbent phase 11, which is in accordance with the present invention, comprises a 5A zeolite molecular sieve and the blend of regenerable CuO/ZnO/Cu/Zn (PuriStar®R3-17) as the at least one transition metal oxide.

The arced g³ mixture 10 coming from the high-pressure vessel 2 is sent to the circuit 3 and successively passes through the first and second devices 5, 6 at a pressure slightly higher than atmospheric pressure. The gaseous phase 12, which is collected at the outlet 7 of the second device 6, is analysed by the FTIR spectrometer 8 and then pumped by the vacuum pump 9 into the gas recovery tank 4 or back again into the circuit 3.

The curves, noted C₀ and C₂, reported in Figure 2 correspond to Gas Chromatography-Mass Spectrometry GC-MS spectral curves showing the abundance (noted A and expressed in a.u.), as a function of the time (noted t and expressed in min), of the compounds (including the by-products) that are present:
- in the arced g³ mixture 10 available in the high-pressure vessel 2, before carrying out the tests of removal of the by-products (curve C₀), and
- in the gaseous phase 12 collected at the outlet 7 of the second device 6, after the second test conducted with the solid adsorbent phase in accordance with the present invention (curve C₂).

Figure 2 also reports an enlargement of the first peaks obtained for times comprised between 8 min to 10 min.

Time noted t, which corresponds to the retention time that is specific for each by-product, directly depends on the chemical affinity of the by-product with the capillary column that is used for phase separation with Chromatography-Mass Spectrometry GC-MS.

Comparison of curves C₀ and C₂, and especially of their respective areas identified by dotted circles on Figure 2, clearly demonstrates that most of the compounds initially present in the arced g³ mixture 10 before passing through the devices 5, 6 have been removed after passing through these devices 5, 6 filled with 5A zeolite molecular sieve and the PuriStar®R3-17 (second test).

This observation is confirmed by the data of Table 1 below, which shows the remaining by-products that are present in each gaseous phase 12 collected after the first and second tests, as identified by the FTIR spectrometer 8.

**Table 1**

| Peak (min) | Remaining by-products | First test (Reference) | Second test (Invention) |
|---|---|---|---|
| 8,59 | COF₂ | yes | yes |
| 8,93 | CF₃-CF₂-CN | no | yes |
| 8,96 | CF₂=CF-CF₃ | no | yes |
| 10,2 | NCCN | yes | yes |
| 11,3 | acids | yes | yes |
| 12,08 | CF₃-C≡C-CN | no | yes |
| 12,94 | CF₂=CF-CN | yes | yes |
| 20,15 | (CF₃)₂CF-COOCN | yes | yes |
| 20,5 | unidentified | partially | yes |
| 11,5 | unidentified | | |
| 15,9 | unidentified | | |
| 16,7 | unidentified | | |

As readable in this Table 1, the solid adsorbent phase of reference is relatively efficient for removing several fluorinated by-products present in the arced g³ mixture 10, but is clearly less efficient than the solid adsorbent phase implemented in the method of the invention.

Actually, this latter solid adsorbent phase, which combines a molecular sieve with at least one transition metal oxide, allows the removal of most of the fluorinated by-products, especially the toxic ones such as CF₂=CF-CF₃ and CF₃-CF₂-CN.

### BIBLIOGRAPHY

[1] Y. Kieffel et al., International Conference & Exhibition on Electricity Distribution (CIRED), Open Access Proc. J., 2017, Vol. 2017, Iss. 1, pages 54-57

## Claims

1. Method for removing fluorinated by-products from a gas (10) comprising such fluorinated by-products, the fluorinated by-products comprising fluoronitrile compounds and/or fluorocarbon compounds, said method comprising a step (a) of contacting the gas (10) with a solid adsorbent phase (11) comprising a molecular sieve, **characterised in that** the solid adsorbent phase (11) further comprises at least one transition metal oxide.

2. Method according to claim 1, wherein step (a) is carried out by passing the gas (10) through the solid adsorbent phase (11) and the method further comprises, after step (a), a step (b) of recovering the gaseous phase (12).

3. Method according to claim 2, wherein the method implements at least one cycle comprising steps (a) and (b).

4. Method according to any one of claims 1 to 3, wherein the at least one transition metal oxide comprises CuO, CuO being advantageously blended with zinc oxide ZnO and/or with one or more transition metals such as Cu or Zn.

5. Method according to any one of claims 1 to 4, wherein the molecular sieve is a zeolite molecular sieve, preferable a 5A zeolite molecular sieve.

6. Method according to any one of claims 1 to 5, wherein the fluoronitrile compounds comprise at least one compound selected from the group consisting of CF₃-CF₂-CN, CF₃-C≡C-CN, CF₂=CF-CN and (CF₃)₂CF-COOCN and, preferably, CF₃-CF₂-CN and CF₃-C≡C-CN and/or the fluorocarbon compounds comprise at least CF₂=CF-CF₃.

7. Method according to any one of claims 1 to 6, wherein the gas (10) results from a partial decomposition under arcing of an electrical insulation gas mixture that comprises CO₂ and (CF₃)₂CF-CN, the electrical insulation gas mixture preferably having the following composition, in mole percent:
- from 70 % mol to 97 % mol of CO₂,
- from 3 % mol to 10 % mol of (CF₃)₂CF-CN, and
- from 0% mol to 20% mol of O₂.

8. Method according to any one of claims 1 to 7, wherein step (a) and possibly step (b) are carried out at a temperature comprised between 0 °C and 40 °C, advantageously between 15 °C and 30 °C and, preferably, between 19 °C and 25 °C.

9. Device (5, 6) for removing fluorinated by-products from a gas (10) comprising such fluorinated by-products, the device comprising a solid adsorbent phase (11) comprising a molecular sieve, **characterised in that** the solid adsorbent phase (11) further comprises at least one transition metal oxide.

10. Use of at least one transition metal oxide in a solid adsorbent phase (11) comprising a molecular sieve for removing fluorinated by-products from a gas (10) comprising said fluorinated by-products, the fluorinated by-products comprising fluoronitrile compounds and/or fluorocarbon compounds.

11. Use according to claim 10, wherein the at least one transition metal oxide comprises CuO, CuO being advantageously blended with zinc oxide ZnO and/or with one or more transition metals such as Cu or Zn.

12. Use according to claim 10 or 11, wherein the molecular sieve is a zeolite molecular sieve, advantageously a 5A zeolite molecular sieve.

13. Use according to any one of claims 10 to 12, wherein the fluoronitrile compounds comprise at least one compound selected from the group consisting of CF₃-CF₂-CN, CF₃-C≡C-CN, CF₂=CF-CN and (CF₃)₂CF-COOCN and, preferably, CF₃-CF₂-CN and CF₃-C≡C-CN.

14. Use according to any one of claims 10 to 13, wherein the fluorocarbon compounds comprise at least CF₂=CF-CF₃.

15. Use according to any one of claims 10 to 14, wherein the gas (10) results from the partial decomposition under arcing of an electrical insulation gas mixture that comprises CO₂ and (CF₃)₂CF-CN, the electrical insulation gas mixture preferably having the following composition, in mole percent:
- from 70 % mol to 97 % mol of CO₂,
- from 3 % mol to 10 % mol of (CF₃)₂CF-CN, and
- from 0% mol to 20% mol of O₂.
